(19) Europäisches Patentamt
European Patent Office
Office européen des brevets

(11) Numéro de publication: **0 370 857 B1**

(12) **FASCICULE DE BREVET EUROPEEN**

(45) Date de publication de fascicule du brevet: **30.03.94**

(51) Int. Cl.5: **B01J 29/30**, B01J 29/36, B01J 29/04, C10G 45/64

(21) Numéro de dépôt: **89403105.3**

(22) Date de dépôt: **10.11.89**

(54) **Catalyseur et son utilisation pour un procédé de déparaffinage catalytique.**

(30) Priorité: **24.11.88 FR 8815500**

(43) Date de publication de la demande:
**30.05.90 Bulletin 90/22**

(45) Mention de la délivrance du brevet:
**30.03.94 Bulletin 94/13**

(84) Etats contractants désignés:
**DE GB NL**

(56) Documents cités:
**EP-A- 0 031 255**
**EP-A- 0 070 657**
**EP-A- 0 183 376**
**EP-A- 0 303 527**
**FR-A- 2 032 346**

**PROCEEDINGS OF THE 7TH INTERNATIONAL ZEOLITE CONFERENCE, Tokyo, 17-22 août 1986, pages 121-128, Elsevier, Amsterdam, NL; J.L. GUTH et al.: "New route to pentasil-type zeolites using a non alkaline medium in the presence of fluoride ions"**

(73) Titulaire: **INSTITUT FRANCAIS DU PETROLE**
**4, Avenue de Bois Préau**
**F-92502 Rueil-Malmaison(FR)**

(72) Inventeur: **Dufresne, Pierre**
**67, rue George Sand**
**F-92500 Rueil Malmaison(FR)**
Inventeur: **Raatz, Francis**
**10, Allée Jacques Prévert**
**F-78260 Acheres(FR)**
Inventeur: **Kessler, Henri**
**17, rue de la Forêt**
**F-68270 Wittenheim(FR)**
Inventeur: **Guth, Jean-Louis**
**59, rue Bellevue**
**Brunstatt**
**F-68200 Mulhouse(FR)**

EP 0 370 857 B1

**Description**

La présente invention se rapporte à un procédé de traitement de charges pétrolières et en particulier les déparaffinages d'hydrocarbures avec notamment amélioration de la tenue au froid de coupes pétrolières, par exemple d'un gas-oil.

La présente invention concerne également le nouveau catalyseur utilisé.

Ce nouveau catalyseur contient une zéolithe de la famille des MFI ou une silice de structure proche de celle des MFI particulièrement adaptées pour l'élimination sélective des paraffines normales ou peu isomérisées d'une charge pétrolière.

Dans ses efforts pour accroître la production de produits légers au détriment du fuel résiduel, le raffineur cherche à augmenter le point de distillation final du distillat et du gasoil. Mais outre la nécessité de ne pas dépasser une certaine teneur en soufre la difficulté majeure qui se présente alors concerne la tenue au froid du gas-oil.

En fait ces caractéristiques sont celles qui la plupart du temps limitent la production de gasoil ou de fuel domestique. Elles sont définies par deux normes :
- AFNOR n° T 60 105 pour le point d'écoulement (P.E.) et le point de trouble (P.T.)
- AFNOR n° M 07 042 pour la température limite de filtrabilité (T.LF).

Le point de trouble (exprimé en °C) est la température à laquelle apparaissent les premiers cristaux de paraffine, alors que le point d'écoulement correspond au figeage complet du produit. La température limite de filtrabilité, intermédiaire entre les deux caractéristiques précédentes, est en relation avec la "pompabilité" du gasoil à travers un filtre dans des conditions standard.

Il est universellement admis que les problèmes posés par la tenue au froid des gas-oils sont liés à la teneur de ceux-ci en paraffines linéaires à longue chaîne dont la teneur varie en général entre 10 et 40 % poids.

Une des voies permettant d'améliorer les propriétés d'écoulement des gas-oils consiste à leur incorporer des additifs. Cette technique a des effets limités. Si elle permet de modifier le point de filtrabilité et le point d'écoulement, il est connu qu'elle demeure d'un effet très faible sur le point de trouble. D'autre part, on peut noter que l'action des additifs est quelquefois très faible sur certains bruts.

On peut obtenir de bons résultats dans le déparaffinage catalytique, grâce à un catalyseur à base d'un solide présentant une sélectivité géométrique adéquate. Les solides de structure MFI, zéolithes ou silices particulières, sont particulièrement bien adaptées pour laisser diffuser rapidement les paraffines normales par rapport aux paraffines isomérisées. Donc des solides de type MFI permettent de craquer sélectivement les paraffines normales par rapport aux paraffines isomérisées.

La présente invention concerne :
- un catalyseur de déparaffinage catalytique comprenant une zéolithe ou une silice de structure MFI synthétisée en milieu fluorure.

La synthèse dans des milieux fluorures de ce type de zéolithe de structure MFI a déjà été décrite dans le brevet français n° 2567868 (EP-A- 172068) et dans la demande de brevet européen n° 88.401.871.4 du 20 juillet 1988 (EP-A-303527).

TABLEAU 1

| Caractéristiques du spectre de diffraction X des solides de structure MFI selon l'invention. | | | | | |
|---|---|---|---|---|---|
| $d_{hkl}$ (Å) ($10^{-10}$ m) | I/Io | $d_{hkl}$ (Å) ($10^{-10}$ m) | I/Io | $d_{hkl}$ (Å) ($10^{-10}$ m) | I/Io |
| 11,08 -11,26 | FF | 4,06 - 4,10 | ff | 2,772 - 2,793 | ff |
| 9,94 - 10,20 | mf | 3,99 - 4,05 | f | 2,725 - 2,749 | ff |
| 9,68 - 9,90 | f | 3,83 - 3,89 | F | 2,677 - 2,697 | ff |
| 8,98 - 9,08 | ff | 3,80 - 3,86 | m | 2,648 - 2,670 | ff |
| 8,00 - 8,09 | ff | 3,74 - 3,78 | mf | 2,605 - 2,619 | ff |
| 7,40 - 7,52 | ff | 3,70 - 3,74 | mf | 2,581 - 2,597 | ff |
| 7,03 - 7,22 | ff | 3,63 - 3,67 | mf | 2,545 - 2,557 | ff |
| 6,64 - 6,84 | f | 3,58 - 3,62 | ff | 2,508 - 2,526 | ff |
| 6,30 - 6,42 | f | 3,46 - 3,50 | ff | 2,479 - 2,501 | ff |
| 5,95 - 6,07 | f | 3,42 - 3,46 | f | 2,407 - 2,419 | ff |
| 5,67 - 5,79 | f | 3,38 - 3,42 | ff | 2,393 - 2,401 | ff |
| 5,54 - 5,61 | f | 3,33 - 3,37 | f | 2,326 - 2,340 | ff |
| 5,32 - 5,42 | ff | 3,29 - 3,33 | ff | 2,314 - 2,332 | ff |
| 5,10 - 5,23 | ff | 3,23 - 3,27 | ff | 2,195 - 2,209 | ff |
| 5,01 - 5,08 | f | 3,16 - 3,20 | ff | 2,104 - 2,120 | ff |
| 4,95 - 5,03 | f | 3,12 - 3,16 | ff | 2,077 - 2,095 | ff |
| 4,84 - 4,93 | ff | 3,08 - 3,12 | ff | 2,070 - 2,084 | ff |
| 4,59 - 4,64 | ff | 3,03 - 3,07 | f | 2,004 - 2,022 | f |
| 4,44 - 4,50 | ff | 2,976 -3,020 | f | 1,985 - 2,005 | f |
| 4,34 - 4,40 | f | 2,943 -2,962 | f | 1,944 - 1,964 | ff |
| 4,23 - 4,29 | f | 2,855 -2,881 | ff | 1,907 - 1,922 | ff |
| | | | | 1,866 - 1,881 | ff |
| FF = très fort ; F = fort ; mF = moyen à fort ; m = moyen mf = moyen à faible ; f = faible ; ff = très faible | | | | | |

Les solides obtenus par cette procédure de synthèse possèdent une structure cristallographique de type MFI. Leur diagrammes de diffraction des rayons X ont des caractéristiques correspondant aux spécifications du tableau 1. Ces solides de structure MFI ont généralement comme formule chimique approchée après calcination exprimée sous forme oxyde :

$$M_{2/n}O, \ x \ Al_2O_3, \ ySiO_2$$

où le rapport y/x peut prendre toute valeur supérieure à 10, et où M représente le ou les cations de compensation de valence n. Ces solides obtenus par cette procédure de synthèse contiennent également l'élément fluor, à une teneur comprise en général entre 0,02 et 2 % poids. Un cas particulier de ces synthèses est celui où x est égal à zéro, c'est-à-dire où la synthèse est réalisée en absence d'aluminium le produit obtenu est alors une silice polymorphe de structure de type MFI.

Ces derniers solides se distinguent des solides de structure MFI de l'art antérieur sur différents points.

Le premier est que la stabilité thermique est largement supérieure à celle habituellement constatée sur les solides de type MFI synthétisés en milieu alcalin. Ainsi on a comparé deux solides de rapport Si/Al égal à 240, l'un ayant été obtenu par synthèse en milieu alcalin, l'autre en milieu fluorure, dans un test de stabilité thermique. Ce test consiste en un chauffage des solides à une température donnée pendant 4 heures sous une atmosphère humide (mélange eau/azote à 10 % d'eau, soit une pression partielle d'eau de 10 kPa).

Il apparait que la zéolithe synthétisée en milieu fluorure conserve une plus grande surface spécifique après traitement à température élevée, comme le montre le tableau 2.

TABLEAU 2

| Milieu de synthèse | Température (°C) | 600 | 900 | 1000 | 1100 | 1200 |
|---|---|---|---|---|---|---|
| OH- | Surface | 370 | 354 | 146 | 22 | 5 |
| F- | Spécifique (m²/g) | 339 | 335 | 328 | 263 | 68 |

La destruction du réseau cristallin n'intervient que pour des températures approchant 1200°C dans ces conditions, alors que les solides classiques de type MFI synthétisés en milieu alcalin commence à se détruire vers 1000°C.

Cette différence de stabilité thermique entre des solides synthétisés en milieu 0H- ou F- peut être expliquée selon l'hypothèse suivante. Les solides de structure MFI synthétisés en milieu alcalin, contiennent des quantités importantes de nids hydroxyles internes, c'est-à-dire de positions tétraédriques non occupées par des atomes de silicium ou d'aluminium. Ces lacunes atomiques sont des points de fragilisation de la structure. En revanche les solides synthétisés en milieu fluorure sont pratiquement exempts de telles lacunes atomiques. L'absence, ou la présence de lacunes atomiques, a bien été mise en évidence grâce à la technique de Résonance Magnétique Nucléaire de l'élément Silicium 29. Cette technique permet de distinguer les différents atomes de silicium selon leur environnement cristallographique d'une part, et électronique d'autre part. Les solides cristallisés de structure MFI présentent différents sites cristallographiques.

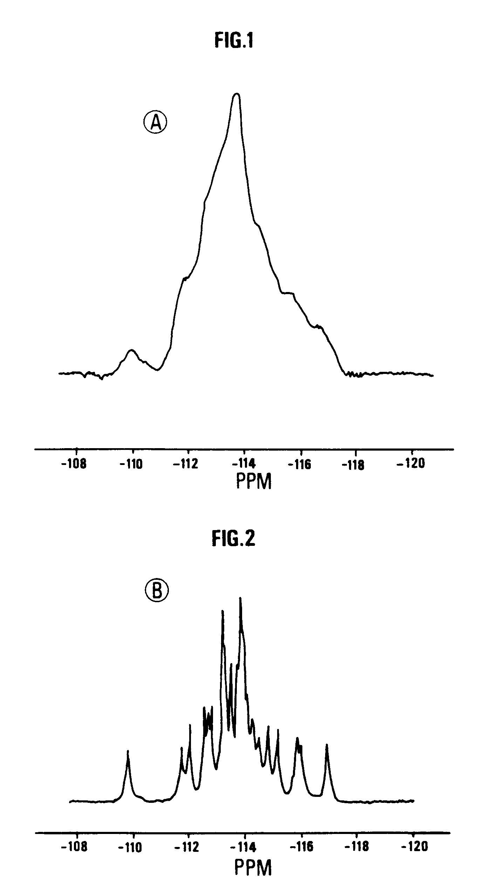

On a comparé deux silices cristallisées de structure MFI, l'une synthétisée en milieu alcalin, l'autre en milieu fluorure avec un appareil RMN de marque BRUCKER 400 MHZ équipé d'un système de rotation de l'échantillon dit "à l'angle magique" (nom de l'appareil en anglais : Magic Angle Spinning Nuclear Magnetic Resonance). Les spectres sont montrés sur les figures 1 et 2. Il apparait que les solides synthétisés en milieu fluorure présentent un spectre composé de raies fines et bien séparées (spectre B de la figure 2). En revanche les solides préparés en milieu alcalin présentent un spectre mal résolu (spectre A de la figure 1), ce qui s'explique par la présence de nombreux groupes Si-OH internes dûes aux lacunes tétraédriques.

Les solides de type MFI synthétisés en milieu fluorure se distinguent donc nettement des solides de type MFI synthétisés en milieu alcalin, sur le plan de l'absence de défauts structuraux, mise en évidence d'une part par la différence de stabilité thermique, d'autre part par la différence de résolution des spectres de Résonance Magnétique Nucléaire. Une autre différence entre les solides synthétisés en milieu alcalin et ceux synthétisés en milieu fluorure vient du fait que ces derniers contiennent, après l'étape de synthèse et également après l'étape d'élimination des composés organiques, l'élément fluor. La teneur en fluor dans la zéolithe déterminée par analyse élémentaire est comprise pour les solides calcinés, c'est-à-dire ceux résultant de l'étape (c) décrite précédemment, entre 0,02 et 1,5 % en poids, avantageusement entre 0,1 et 1,0 % et de préférence entre 0,2 et 0,8 %.

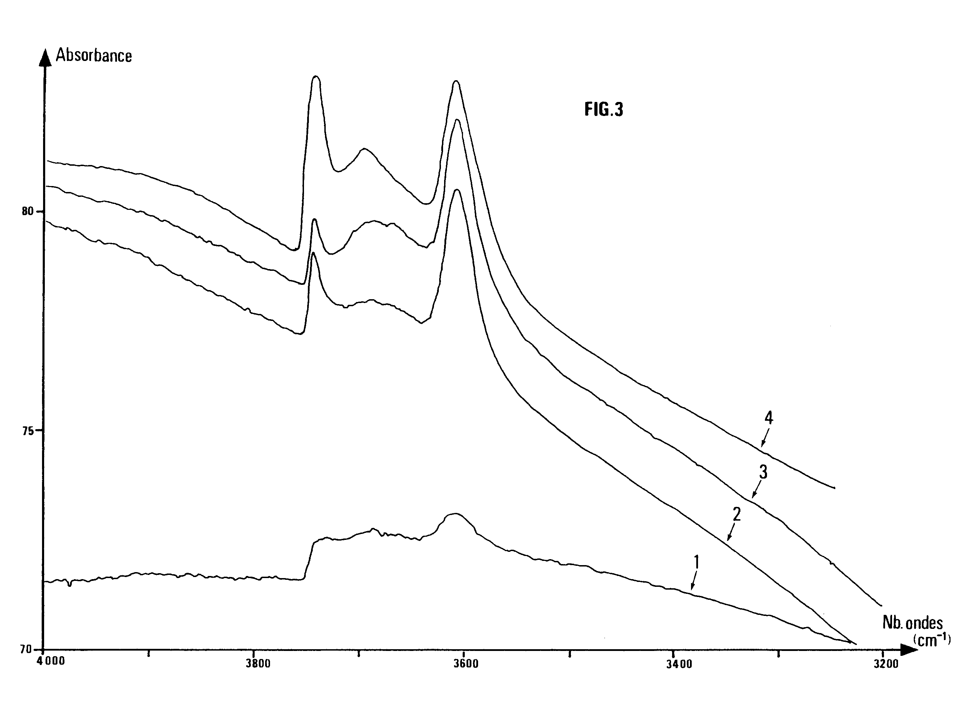

La présence de fluor dans les zéolithes de structure MFI préparées selon l'invention confère à ces solides certaines propriétés, notamment des propriétés acides et d'échange ionique, tout à fait différentes de celles des zéolithes de structure MFI synthétisées de manière classique, c'est-à-dire en milieu alcalin (US 3.702.886 par exemple). Après synthèse et élimination des composés organiques par calcination (étapes a, b, c), les solides selon l'invention sont caractérisés par un spectre de vibration infrarouge qui présente comme l'illustre la figure 3 pour des teneurs en fluor de 0,8 % (courbe 1), de 0,2 % (courbe 2) et de 0,05 % (courbe 3) des bandes attribuées classiquement aux groupes Si-OH (zone 3730-3750 cm⁻¹) et aux groupes Al-OH structuraux (région 3580-3640 cm⁻¹ ) très peu intenses par rapport à celles d'une zéolithe de structure MFI classique, de même rapport Si/Al égal à 22 (courbe 4, % F = 0).

L'absence ou la quasi absence de groupes Al-OH structuraux dans les zéolithes selon l'invention est confirmée par les capacités d'échange ionique de ces solides. En effet les capacités d'échange ionique pour des cations tels que par exemple $Na^+$, $K^+$, $Ga^{3+}$, $Pt(NH_3)_4^{2+}$ etc sont très inférieures aux capacités d'échange théoriques totales que l'on peut calculer à partir de la teneur en aluminium de la charpente cristalline.

Ces solides ne présentant pas ou peu d'hydroxyles structuraux, et dont la capacité d'échange est très réduite, possèdent de manière surprenante des propriétés acides remarquables. Ainsi la thermodésorption d'ammoniac qui permet de rendre compte de l'acidité globale d'un solide (nombre et force des différents types de sites acides) montre que les solides comprenant du fluor incorporé dans la structure sont très acides. Les spectres de thermodésorption d'ammoniac sont comparables à ceux que l'on obtiendrait avec des zéolithes de structure MFI classiques, cependant l'acidité des solides selon l'invention est d'une nature différente.

L'introduction de fluor dans les zéolithes est une méthode qui a déjà été proposée pour augmenter l'acidité de ces solides par exemple dans US 4.540.841. Cependant dans l'art antérieur le fluor est introduit dans la zéolithe par des modifications réalisées après la synthèse. En d'autres termes on réalise une synthèse classique, c'est-à-dire en milieu alcalin puis on traite le solide par une technique conventionnelle de fluoration permettant en principe de fixer du fluor. Ces techniques précédemment proposées, souffrent généralement de gros défauts. Elles sont par exemple, comme c'est le cas quand on traite le solide par du fluor gazeux, succeptibles de conduire à une dégradation de l'ordre cristallin (US 4.297.335). Dans la présente préparation du catalyseur, le fluor est introduit dans la zéolithe au niveau de la synthèse et permet au contraire d'aboutir à des solides très bien cristallisés.

Par des traitements particuliers il est possible d'éliminer partiellement ou totalement le fluor contenu dans les solides entrant dans la composition des catalyseurs selon l'invention sans altérer leur cristallinité. Une technique que l'on peut utiliser pour défluorer les solides est décrite dans notre demande de brevet européen n° 88.401.871.4 du 20 juillet 1988.

En conclusion, il apparait donc clairement que les solides de type MFI (ou de type silice de structure analogue) synthétisés en milieu fluorure se distinguent nettement de leur homologues synthétisés en milieu alcalin. Ces distinctions concernent la présence de défauts structuraux, mise en évidence par les tests de stabilité thermique et de Résonance Magnétique Nucléaire ; elles portent aussi sur la présence de fluor, même après calcination, ce qui influe sur le type de sites acides, comme le montre la spectroscopie infra-rouge.

Ce sont ces particularités que nous avons mises à profit pour préparer des catalyseurs d'amélioration de tenue au froid de diverses coupes pétrolières. Les catalyseurs selon l'invention se révèlent supérieurs à ceux revendiqués dans l'art antérieur. Sans être lié à aucune théorie, il est clair que les différences structurales d'une part, et acides d'autre part, des solides utilisés contribuent à engendrer des propriétés catalytiques distinctes.

La zéolithe ou la silice, de type MFI, peut ensuite être mise en forme en utilisant une matrice ou liant qui peut être inerte ou actif pour la réaction à promouvoir, elle peut également être utilisée seule. Les matrices que l'on emploie (0,5 à 98 % environ de la masse catalytique et de préférence 10 à 90 %) sont généralement choisies dans le groupe des argiles ou des alumines, silice-magnésie, zircone, oxyde de titane, oxyde de bore ou toute combinaison des produits précités comme silice-alumine, silice- magnésie etc... Toutes les méthodes connues d'agglomération et de mise en forme sont applicables, telles que par exemple, extrusion, pastillage, coagulation en goutte etc...

La teneur en MFI ou en silice de structure analogue à la structure MFI doit être comprise entre 2 et 99.5 % en poids environ, et de manière préférée comprise entre 10 et 90 % en poids.

Le catalyseur est associé à une fonction hydrogénante telle que au moins un métal ou un composé de métal constitué de nickel ou cobalt ou molybdène ou tungtène, de préférence l'un au moins des métaux suivants : nickel, et cobalt ou des couples suivants d'oxydes métalliques : $MoO_3$-NiO, $WO_3$-NiO ou $MoO_3$-CoO. Ces éléments sont déposés par imprégnation du support par des solutions de sels métalliques tels que par exemple acétate, nitrate ou chlorure pour le nickel ou le cobalt, molybdate ou tungstates d'ammonium. Dans le cas des couples d'oxydes métalliques $MoO_3$-NiO, $WO_3$-NiO ou $MoO_3$-CoO, le sel de nickel ou de cobalt peut être déposé après une première imprégnation du support par la solution du sel du métal du groupe VI B, suivie d'une calcination entre 200 et 550°C, mais peut être aussi déposé en même temps que le sel du métal du groupe VI B. Après la dernière imprégnation, le catalyseur est séché entre 80 et 300°C puis calciné entre 350 et 700°C et de préférence entre 450 et 600°C. Les teneurs en métaux ou oxydes métalliques du catalyseur final sont situées à l'intérieur des fourchettes suivantes : 0,5 à 30 %. De préférence on utilise :

NiO entre 0,5 et 16 % poids et de préférence entre 2 et 10 % poids

CoO entre 0,5 et 16 % poids et de préférence entre 2 et 10 % poids

$MoO_3$ entre 0,1 et 25 % poids et de préférence entre 6 et 20 % poids

$WO_3$ entre 0,1 et 25 % poids et de préférence entre 6 et 20 % poids.

Le catalyseur peut également contenir d'autres éléments, comme le phosphore en particulier, introduit selon les méthodes connues de l'art antérieur pour les catalyseurs d'hydrotraitement ou d'hydrocraquage.

Le catalyseur ainsi obtenu est utilisé en particulier pour améliorer, par déparaffinage, la tenue au froid d'un gas-oil moyen caractérisé par un point initial compris entre 200 et 420°C et un point final compris entre 320 et 600°C, une teneur en soufre comprise entre 0.1 et 3,5 % en poids et ayant des points d'écoulement et de trouble supérieurs à 0°C.

Les conditions opératoires sont de préférence les suivantes :

. Pression entre 0,5 et 10 MPa et de préférence entre 1 et 7 MPa.

. Température entre 200 et 500°C et de préférence entre 250 et 430°C.

. Vitesse spatiale exprimée en volume de charge par unité de volume de catalyseur et par heure, entre 0,1 et 4 et de préférence entre 0,3 et 2.

. Rapport volumique $H_2$/gas-oil compris entre 100 et 1500 litres par litre et de préférence entre 200 et 1000 litres par litre.

L'utilisation du catalyseur objet de la présente invention dans les conditions décrites ci-dessus permet des améliorations de point d'écoulement et de point de trouble supérieurs à 10°C. Dans le cas des catalyseurs contenant les couples d'oxydes $MoO_3$-NiO, $WO_3$-NiO, ou $MoO_3$-CoO des taux de désulfuration supérieurs à 90 % peuvent être atteints.

Les exemples qui suivent illustrent la présente invention et ne doivent pas être considérés comme limitatifs.

EXEMPLE 1 : Préparation des zéolithes (solides S1 et S2) entrant dans la composition des catalyseurs selon l'invention.

On prépare deux zéolithes de structure MFI de rapports atomiques Si/Al proches de 20 et 240 à partir d'une même source d'aluminium et de silicium, à savoir du Tixolex 28 partiellement désaluminé et en utilisant deux rapports atomiques F/Si différents dans les deux mélanges réactionnels.

Le Tixolex 28 est un aluminosilicate de sodium commercialisé par Rhône Poulenc et caractérisé par les rapports atomiques Si/Al = 7,3 et Na/Al = 1,1. On prépare la forme partiellement désaluminée de la manière suivante : 60 g de Tixolex 28 sont agités pendant 3 heures à température ambiante avec 600 ml de $HNO_3$ M/2. Le produit obtenu est filtré et lavé à l'eau jusqu'à pH 7. Après séchage à 80°C, il est conservé dans une humidité relative de 80 %. La composition pondérale est la suivante 76,10 % $SiO_2$ ; 5,46 % $Al_2O_3$ ; 0,24 % % $Na_2O$ ; 17,63 % $H_2O$ totale.

On prépare deux mélanges réactionnels A, B dont les compositions molaires et pondérales sont indiquées dans le tableau 3. Pour cela, on ajoute sous agitation le mélange de $NH_4F$, $N(C_3H_7)_4$ $Br^-$ et eau au Tixolex partiellement désaluminé. La cristallisation des deux mélanges réactionnels A, B est réalisée dans deux autoclaves, dont les revêtements internes sont constitués de polytétrafluoroéthane, à 190°C pendant 3,5 jours.

TABLEAU 3

| | | Tixolex partiellement désaluminé | | $NH_4F$ | $N(C_3H_7)_4$ Br | |
|---|---|---|---|---|---|---|
| | | $SiO_2$ | $Al_2O_3$ | | | |
| A | moles | 0,2 | 0,0084 | 0,04 | 0,1 | 1,6 |
| | g | 15,8 | | 1,48 | 26,6 | 28,8 |
| B | moles | 0,2 | 0,0084 | 0,25 | 0,1 | 1,6 |
| | g | 15,8 | | 9,25 | 26,6 | 28,8 |

Après cristallisation les solides sont filtrés et lavés avec une solution de diéthylamine à 10 % puis avec une solution d'eau chaude. Les solides sont ensuite séchés à 80°C. L'analyse cristallographique montre que les produits S1 et S2 sont bien des zéolithes de structure MFI dont le diagramme de diffraction des rayons X correspond aux spécification du tableau 1. L'analyse chimique des produits A et B après calcination sous air à 550°C est la suivante :

| Produits | S1 | S2 |
|---|---|---|
| (Si/Al) atomique | 22 | 240 |
| F(% poids) | 0,8 | 0,5 |

EXEMPLE 2 : Synthèse de silice fluorée de structure analogue à la MFI (solide S3) et entrant dans la composition d'un catalyseur conforme à l'invention.

On prépare une silice polymorphe dont la structure est analogue à celle de la MFI. La source de silice est l'AEROSIL 130 de la société DEGUSSA. On ajoute sous agitation du fluorure d'ammonium dans l'eau, puis du bromure de tétrapropylammonium et enfin l'aérosil dans des proportions correspondant à la formule suivante :

$1SiO_2$, $5OH_2O$, 0,5 $NH_4F$, 0,25 TPA Br.

Le gel est ensuite chauffé à 200°C pendant 6 jours dans un autoclave.

Le pH du mélange, initialement de 7, évolue vers 6,5 à la fin de la synthèse. La suspension est ensuite filtrée, lavée à l'eau et séchée. Le produit est calciné à 550°C pour éliminer les cations organiques. La teneur en fluor est de 0,5 % poids, et le spectre de diffraction est conforme aux indications du tableau I.

EXEMPLE 3 (non conforme à l'invention). Préparation des solides de type MFI, non fluoré d'une part et fluoré non conformément à l'invention d'autre part.

On synthétise en milieu $OH^-$ une zéolithe de structure MFI de rapport Si/Al = 240 en utilisant la procédure connue de l'art antérieur et décrite dans le brevet US 3.702.886. Cette zéolithe subit une calcination à 550°C suivie de trois échanges en milieu $NH_4NO_3$ 3N.

On obtient ainsi une MFI sous forme protonique dépourvue de cations sodium (teneur en sodium inférieure à $50.10^{-6}$ g/g), de référence S4.

Ce solide est ensuite soumis à un traitement à 450°C sous une atmosphère contenant $CHF_3$ pendant 4 heures. La teneur en fluor atteint à l'issue de ce traitement est de 0,15 % en poids, et son spectre de diffraction, conforme aux indications du tableau I, montre référencé S5.

On synthétise également en milieu $OH^-$ une silice polymorphe de structure type MFI en utilisant une procédure connue de l'art antérieur et décrite dans le brevet US 3702886. Le solide est calciné à 550°C avant utilisation ultérieure. Son spectre de diffraction est conformé aux indications du tableau I. Ce produit est référencé S6.

EXEMPLE 4 : Fabrication des catalyseurs.

Les catalyseurs sont fabriqués de la manière suivante. Les solides de référence S, dont la préparation est décrite dans les exemples précédents, sont mélangés à un gel d'alumine de type CATAPAL de la société CONDEA, dans une proportion de poids sec 40 % solide S - 60 % d'alumine. Le mélange est peptisé par ajout d'acide nitrique à raison de 2 g d'acide pur pour 100 g de mélange, puis malaxé dans un malaxeur à bras en forme de Z, puis forcé à travers une filière dont les trous ont un diamètre de 1,6 millimètres. Les extrudés obtenus sont séchés à 120°C pendant 15 heures, puis calcinés sous air à 550°C pendant 2 heures.

Le support ainsi obtenu est imprégné par une solution aqueuse de paramolybdate d'ammonium, puis séché à 120°C et calciné à 350°C. Ce solide est à nouveau imprégné par une solution aqueuse de nitrate de nickel, séché puis calciné à 500°C. La teneur en oxydes métalliques est la suivante : 2 % de NiO et 12 de $MoO_3$.

Le tableau 4 résume les caractéristiques des zéolithes et des catalyseurs.

EP 0 370 857 B1

TABLEAU 4

| Solides cristallisés de type MFI | | | | Catalyseurs Références |
|---|---|---|---|---|
| Référence | Fluoré | Origine fluor | Si/Al | |
| S1 | oui | Synthèse | 20 | C1 |
| S2 | oui | Synthèse | 240 | C2 |
| S3 | oui | Synthèse | sans Al | C3 |
| S4 | non | - | 240 | C4 |
| S5 | oui | Fluoration* | 240 | C5 |

\* non conforme à l'invention

EXEMPLE 5 Test de déparaffinage catalytique.

Les catalyseurs dont la préparation est décrite dans les exemples précédents sont soumis à un test de déparaffinage d'un gas-oil. Les caractéristiques de la charge sont portées dans le tableau 5. Ce gas-oil est caractérisé notamment par des points de trouble et d'écoulement d'environ + 21°C et une teneur en soufre de 2,05 % en poids.

Les essais sont réalisés dans les conditions suivantes :
.   Pression totale  =  45 bars
.   Vitesse spatiale d'alimentation (VVH) en volume de charge par unité de volume de catalyseur et par heure  =  0,5.
.   Rapport volumique $H_2$/gas-oil  =  300 litres d'hydrogène gazeux/litre de charge liquide.
.   Température variable entre 340 et 410°C.

Le système catalytique est constitué pour moitié d'un catalyseur d'hydrotraitement placé en tête de lit et pour moitié du catalyseur à tester. Le premier catalyseur réalise un hydrotraitement partiel de la charge, notamment les réactions d'hydrodésulfuration, hydrodésazotation et hydrogénation des aromatiques. Le second doit assurer aussi partiellement ces réactions et surtout réaliser le déparaffinage catalytique sur une charge déjà partiellement purifiée. Le catalyseur de première étape utilisé est le HR348 commercialisé par la société PROCATALYSE ; il est constitué de nickel et de molybdène déposé sur alumine.

8

TABLEAU 5

| CARACTERISTIQUES DE LA CHARGE GAS-OIL | | |
|---|---|---|
| Distillation ASTM D86 ( °C) | Point initial | 260 |
| | 10 % | 296 |
| | 30 % | 320 |
| | 50 % | 343 |
| | 70 % | 366 |
| | 90 % | 398 |
| | Point final | 414 |
| Densité | à 20 °C | 0,880 |
| Viscosité (cSt) (1 cSt = $10^{-6}$ m²/sec) | à 20 °C | 15,5 |
| | à 50 °C | 5,9 |
| Indice de réfraction | à 20 °C | 1,4894 |
| Point d'aniline ( °C) | | 72,6 |
| Soufre (% poids) | | 1,3 % |
| Azote (ppm) | | 310 |
| Point d'écoulement ( °C) | | + 15 |
| Point de trouble ( °C) | | + 16 |

Le test est opéré de la manière suivante. Après chargement des catalyseurs, ceux-ci sont présulfurés par le mélange de sulfure d'hydrogène et d'hydrogène. Puis la pression est portée à 45 bars, et la charge est injectée à 150°C, et portée progressivement à 340°C. Après 48 heures à cette température, celle-ci est portée à 360°C pendant 48 heures, puis à 380°C pendant 48 heures.

Les performances des catalyseurs, rassemblées dans le tableau 2, sont exprimées à l'aide des caractéristiques suivantes :

. Rendement pondéral en coupe $170^+$ (Rdt $170^+$)

. Point de trouble et point d'écoulement de la coupe $170^+$. Le point de trouble correspond à la température à laquelle apparaissent les premiers cristaux de paraffines. Le point d'écoulement correspond à la température de prise en masse du solide.

Le tableau 6 présente les performances des catalyseurs C1 à C5.

TABLEAU 6

| | Point d'écoulement | | | Point de trouble | | | Rendement $170^+$ % | | |
|---|---|---|---|---|---|---|---|---|---|
| | 340 | 360 | 380 | 340 | 360 | 380 | 340 | 360 | 380 |
| Catalyseur C1 | - 9 | - 33 | - 50 | 6 | - 10 | - 25 | 91 | 88 | 86 |
| C2 | 0 | - 9 | - 32 | 8 | - 7 | - 18 | 94 | 90 | 89 |
| C3 | 12 | - 6 | - 18 | 15 | 3 | - 2 | 96 | 95 | 93 |
| C4 | + 9 | - 6 | - 15 | 12 | 2 | - 10 | 94 | 88 | 86 |
| C5 | + 6 | - 6 | - 15 | 9 | 1 | - 6 | 90 | 87 | 86 |

Il apparait que les catalyseurs C1 et C2, lesquels contiennent des zéolithes synthétisées en milieu fluorure, sont ceux qui permettent d'atteindre les points d'écoulement et de trouble les plus bas. Le catalyseur C3, avec une silice de structure MFI, synthétisée en milieu fluorure, est moins actif que les deux premiers, mais représente néanmoins un bon compromis entre l'amélioration de la tenue au froid et le rendement liquide. Les catalyseurs C4 et C5 qui contiennent des zéolithes synthétisées en milieu alcalin, l'une ayant été fluorée par un traitement post-synthèse sont moins actifs que le catalyseur C2 auquel ils doivent être comparés. La zéolithe S2 conforme à l'invention, synthétisée en milieu fluorure et de rapport Si/Al égal à 240 est donc la plus performante en déparaffinage de gas-oil.

**Revendications**

1.  Catalyseur renfermant en poids :
    a) 2 à 99,5 % d'une zéolithe de la famille des MFI ou une silice de structure proche de celle des MFI, la dite zéolithe ou la dite silice ayant été synthétisée en milieu fluorure et ayant une teneur en fluor comprise entre environ 0,02 et 1,5 % en poids, la dite zéolithe ou la dite silice étant caractérisée par un diagramme de diffraction des rayons X représenté dans le tableau 1 de la description,
    b) 0,5 à 98 % d'une matrice,
    c) 0,5 à 30 % d'au moins un métal choisi dans le groupe formé par le nickel, le cobalt, le molybdène et le tungstène.

2.  Catalyseur selon la revendication 1 renfermant :
    a) 10 à 90 % de la dite zéolithe ou de la dite silice,
    b) 10 à 90 % de la dite matrice,
    c) au moins un oxyde choisi dans le groupe constitué par

$NiO$ avec une concentration pondérale comprise entre 0,5 et 16 %
$CoO$   "         "         "         "      " 0,5 et 16 %
$MoO_3$ "         "         "         "      " 0,1 et 25 %
$WO_3$  "         "         "         "      " 0,1 et 25 %.

3.  Catalyseur selon la revendication 2 dans lequel la dite zéolithe ou la dite zéolithe ou la dite silice renferme en poids 0,1 à 1 % de fluor.

4.  Catalyseur selon la revendication 2 renfermant au moins l'un des couples choisi dans le groupe constitué par $MoO_3$-$NiO$, $WO_3$-$NiO$ et $MoO_3$-$CoO$.

5.  Utilisation d'un catalyseur selon l'une des revendications 1 à 4 dans un procédé de déparaffinage de coupes pétrolières et plus particulièrement d'amélioration de la tenue au froid d'un gas-oil.

**Claims**

1.  Catalyst containing by weight:
    a) 2 to 99.5% of a zeolite of the MFI type or a silica with a structure close to that of MFI, said zeolite or said silica having been synthesized in the fluoride medium and having a fluorine content between approximately 0.02 and 1.5% by weight, said zeolite or said silica being characterized by an X-ray diffraction diagram shown in table 1 of the description,
    b) 0.5 to 98% of a matrix,
    c) 0.5 to 30% of at least a metal selected from the group formed by nickel, cobalt, molybdenum and tungsten.

2.  Catalyst according to claim 1 containing:
    a) 10 to 90% of said zeolite or said silica,
    b) 10 to 90% of said matrix,

c) at least one oxide chosen from the group constituted by

```
NiO  with  a  weight  concentration  between  0.5 and 16%

CoO   "   "   "          "          "    0.5 and 16%

MoO    "   "   "          "          "    0.1 and 25%
   3

WO     "   "   "          "          "    0.1 and 25%.
  3
```

**3.** Catalyst according to claim 2, wherein said zeolite or said silica contains 0.1 to 1% by weight fluorine.

**4.** Catalyst according to claim 2 containing at least one of the pairs chosen in the group constituted by $MoO_3$-NiO, $WO_3$-NiO and $MoO_3$-CoO.

**5.** Use of a catalyst according to one of the claims 1 to 4 in a process for the dewaxing of petroleum fractions and more particularly for improving the cold behaviour of a gas oil.

**Patentansprüche**

**1.** Katalysator, in Gewichtsprozent umfassend:
   a) 2 bis 99,5 % eines Zeolith der Familie des MFI oder eines Siliciumoxids einer Struktur benachbart der des MFI, wobei dieser Zeolith oder dieses Siliciumoxid in Fluoridumgebung synthetisiert worden sind und ein Gehalt an Fluor zwischen etwa 0,02 und 1,5 Gewichtsprozent haben, wobei dieser Zeolith oder dieses Silicium sich auszeichnet durch ein Beugungsdiagramm der Röntgenstrahlen, dargestellt in Tafel 1 der Beschreibung,
   b) 0,5 bis 98 % einer Matrix und
   c) 0,5 bis 30% wenigstens eines Metalls, das gewählt ist aus der Gruppe, die durch Nickel, Kobalt, Molybdän und Wolfram gebildet ist.

**2.** Katalysator nach Anspruch 1, umfassend:
   a) 10 bis 90 % dieses Zeolith oder dieses Siliciumoxids,
   b) 10 bis 90 % dieser Matrix,
   c) wenigstens ein Oxid gewählt aus der Gruppe gebildet durch

```
NiO mit einer Gewichtskonzentration zwischen 0,5 und 16%

CoO  "     "                "                "    0,5 und 16%

MoO  "     "                "                "    0,1 und 25%
   3

WO   "     "                "                "    0,1 und 25%
  3
```

**3.** Katalysator nach Anspruch 2, bei dem dieser Zeolith oder dieser Zeolith oder dieses Siliciumoxid 0,1 bis 1 Gewichtsprozent Fluor umfaßt.

**4.** Katalysator nach Anspruch 2, wenigstens eines der Paare umfassend, das gewählt ist aus der Gruppe, die gebildet wird durch $MoO_3$-NiO, $WO_3$-NiO und $MoO_3$-CoO.

**5.** Verwendung eines Katalysators nach einem der Ansprüche 1 bis 4 bei einem Verfahren zur Entparaffinierung von Erdölfraktionen und insbesondere zur Verbesserung des Kälteverhaltens eines Gasöls.

## FIG.1

## FIG.2

FIG.3

Absorbance

Nb. ondes (cm⁻¹)

EP 0 370 857 B1